(19) Europäisches Patentamt
European Patent Office
Office européen des brevets

(11) **EP 4 564 064 A1**

(12) **EUROPEAN PATENT APPLICATION**
published in accordance with Art. 153(4) EPC

(43) Date of publication:
**04.06.2025  Bulletin 2025/23**

(21) Application number: **23899952.8**

(22) Date of filing: **05.12.2023**

(51) International Patent Classification (IPC):
*G01V 1/28* (2006.01)      *G01V 1/30* (2006.01)
*G01V 1/36* (2006.01)      *G06F 17/10* (2006.01)

(52) Cooperative Patent Classification (CPC):
**G01V 1/28; G01V 1/30; G01V 1/36; G06F 17/10**

(86) International application number:
**PCT/CN2023/136386**

(87) International publication number:
**WO 2024/120376 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **07.12.2022  CN 202211567081**

(71) Applicants:
• **China National Petroleum Corporation**
  **Beijing 100007 (CN)**
• **BGP Inc., China National Petroleum Corporation**
  **Hebei 072751 (CN)**
• **CNPC Exploration Software Co., Ltd**
  **Beijing 100080 (CN)**

(72) Inventors:
• **SONG, Qianggong**
  **Baoding, Hebei 072751 (CN)**
• **WU, Wei**
  **Baoding, Hebei 072751 (CN)**
• **WU, Xiaofeng**
  **Baoding, Hebei 072751 (CN)**
• **DAI, Nanxun**
  **Baoding, Hebei 072751 (CN)**
• **CHEN, Jing**
  **Baoding, Hebei 072751 (CN)**
• **GUO, Mingjie**
  **Baoding, Hebei 072751 (CN)**

(74) Representative: **Ström & Gulliksson AB**
  **P.O. Box 4188**
  **203 13 Malmö (SE)**

(54) **STABLE CONVERGENCE LEAST SQUARES MIGRATION INVERSION METHOD AND APPARATUS**

(57)    Examples of the disclosure provide a method and apparatus for least-squares migration inversion converging stably, which belong to the technical field of seismic data depth domain migration imaging. The method includes: obtaining seismic observation data; obtaining amplitude regularized seismic data by performing pre-stack depth migration, demigration and amplitude regularization on the seismic observation data; obtaining a residual value of seismic data by performing matching subtraction on the seismic observation data and the amplitude regularized seismic data; obtaining, by using an adjoint state method, a gradient field of the inversion on the basis of least-squares reverse-time migration; obtaining a processed gradient field by performing, by using an amplitude calibration operator, amplitude calibration on the gradient field of the inversion; and computing an update step by using an inversion method based on the processed gradient field, and updating a reflection coefficient until the inversion converges. The method of the disclosure can make a least-squares objective function converge, and improve convergence and stability of the inversion.

EP 4 564 064 A1

| | |
|---|---|
| Obtain seismic observation data | S1 |

↓

| | |
|---|---|
| Obtain a migration profile by performing pre-stack depth migration on the seismic observation data | S2 |

↓

| | |
|---|---|
| Obtain demigration synthesized seismic data by performing demigration on the migration profile | S3 |

↓

| | |
|---|---|
| Compute a dot product based on the seismic observation data and the demigration synthesized seismic data | S4 |

↓

| | |
|---|---|
| Determine an inner product of the migration profile | S5 |

↓

| | |
|---|---|
| Obtain amplitude regularized seismic data by performing, based on the dot product and the inner product, amplitude regularization on the demigration synthesized seismic data | S6 |

↓

| | |
|---|---|
| Obtain a residual value of seismic data by performing matching subtraction on the seismic observation data and the amplitude regularized seismic data | S7 |

↓

| | |
|---|---|
| Obtain, by using an adjoint state method, a gradient field of the inversion based on the residual value of the seismic data and on the basis of least-squares reverse-time migration | S8 |

↓

| | |
|---|---|
| Obtain a processed gradient field by performing, by using an amplitude calibration operator, amplitude calibration on the gradient field of the inversion | S9 |

↓

| | |
|---|---|
| Compute an update step by using an inversion method based on the processed gradient field, and update a reflection coefficient until the inversion converges | S10 |

FIG. 2

**Description**

**Field of the Invention**

The disclosure relates to the technical field of seismic data depth domain migration imaging, in particular to a method for least-squares migration inversion converging stably, an apparatus for least-squares migration inversion converging stably, a machine-readable storage medium, and a processor.

**Background of the Invention**

One important purpose of seismic data processing is to obtain high-quality images in depth domain through depth migration. The least-squares depth migration based on inversion is to reduce an error difference between forward data and observation data through continuous iterations, and is a process of eliminating false migration and uneven observation illumination in migration profiles and finding an optimal migration profile. With this migration profile as a reflection coefficient, a seismic record synthesized through demigration is closest to a real seismic record. The inverse migration can be simulated by the Kirchhoff method based on ray path integration, or the one-way wave or two-way wave method based on solving of a wave equation.

In the prior art, a dot-test method is used to test a demigration operator and its self-adjoint operator, and the inversion process can converge only if an adjoint operator passes the test. The traditional technology has high requirements on a migration operator and the demigration operator in the inversion process, and the inversion will not converge unless the operators pass the dot-test. As a result, stable convergence is difficult in the prior art.

**Summary of the Invention**

An objective of examples of the disclosure is to provide a method and apparatus for least-squares migration inversion converging stably, which improve convergence and stability of the inversion.

In order to achieve the objective described above, a first aspect of the disclosure provides a method for least-squares migration inversion converging stably. The method includes:

obtaining seismic observation data;

obtaining a migration profile by performing pre-stack depth migration on the seismic observation data;

obtaining demigration synthesized seismic data by performing demigration on the migration profile;

computing a dot product based on the seismic observation data and the demigration synthesized seismic data;

determining an inner product of the migration profile;

obtaining amplitude regularized seismic data by performing, based on the dot product and the inner product, amplitude regularization on the demigration synthesized seismic data;

obtaining a residual value of seismic data by performing matching subtraction on the seismic observation data and the amplitude regularized seismic data;

obtaining, by using an adjoint state method, a gradient field of the inversion based on the residual value of the seismic data and on the basis of least-squares reverse-time migration;

obtaining a processed gradient field by performing, by using an amplitude calibration operator, amplitude calibration on the gradient field of the inversion; and

computing an update step by using an inversion method based on the processed gradient field, and updating a reflection coefficient until the inversion converges.

In an example of the disclosure, the obtaining seismic observation data comprises:

obtaining initial seismic observation data by a forward modeling method; and

obtaining the seismic observation data by performing preprocessing on the initial seismic observation data; wherein the preprocessing comprises noise removal and environmental interference removal.

In an example of the disclosure, the least-squares reverse-time migration is an imaging algorithm based on the inversion, and an objective function of the inversion is as follows:

$$\min f(m) = \frac{1}{2}\|F(m) - d\|^2 ; \qquad (1)$$

wherein min $f(m)$ denotes a minimum value of the objective function, $F$ denotes a demigration operator, $d$ denotes the seismic data, and $m$ denotes a reflection coefficient model.

In an example of the disclosure, the obtaining, by using an adjoint state method, a gradient field of the inversion comprises:

computing a forward continuation wavefield u and a backward continuation wavefield v ; and
computing the gradient field $\nabla f(m)$ of the inversion based on the forward continuation wavefield u and the backward continuation wavefield v .

In an example of the disclosure, the forward continuation wavefield u and the backward continuation wavefield v are computed by formulas (2)-(4) as follows:

$$\begin{cases} \dfrac{1}{v^2}\dfrac{\partial^2 u}{\partial t^2} - \Delta u = g(t) \\[2mm] \dfrac{1}{v^2}\dfrac{\partial^2 w}{\partial t^2} - \Delta u = m(x)u(\vec{x},t) \\[2mm] u(\vec{x},0) = 0 \quad , w(\vec{x},0) = 0 \\[2mm] \dfrac{\partial u}{\partial t}(\vec{x},0) = 0 \quad , \dfrac{\partial w}{\partial t}(\vec{x},0) = 0 \end{cases} ; \qquad (2)$$

$$\begin{cases} \dfrac{1}{v^2}\dfrac{\partial^2 v}{\partial t^2} - \Delta v = w - d \\[2mm] v(\vec{x},T) = 0 \\[2mm] \dfrac{\partial v}{\partial t}(\vec{x},T) = 0 \end{cases} ; \qquad (3)$$

$$\frac{\partial f}{\partial m} = \int_0^T v\frac{\partial^2 u}{\partial t^2}\,dt ; \qquad (4)$$

wherein g denotes a source wavelet, w denotes a reflection wavefield, u denotes the forward continuation wavefield, v denotes the backward continuation wavefield, $\Delta$ denotes a Laplace operator, $\vec{x}$ denotes a coordinate of a discrete point in a two-dimensional space or a three-dimensional space, $m(x)$ denotes a reflection coefficient corresponding to the discrete point in the two-dimensional or the three-dimensional space, T denotes total duration of a seismic record, and t denotes time.

In an example of the disclosure, the method further comprising: establishing the amplitude calibration operator; wherein
the establishing the amplitude calibration operator comprises:

obtaining a first migration result $m_{mig}^1 = F^T d$ by performing first pre-stack depth migration on the seismic observation data $d$;
obtaining a first demigration synthesized seismic data $\hat{d}^1 = F(m_{mig}^1)$ by performing demigration on the first migration

result $m_{mig}{}^1 = F^T d$ ;

obtaining a second migration result $m_{mig}{}^2 = F^T \widehat{d}^1$ by performing second pre-stack depth migration on the first demigration synthesized seismic data $\widehat{d}^1 = F(m_{mig}{}^1)$; and

establishing the amplitude calibration operator $S(\vec{x})$ based on the first migration result $m_{mig}{}^1 = F^T d$ and the second migration result $m_{mig}{}^2 = F^T \widehat{d}^1$ .

In an example of the disclosure, the amplitude calibration operator $S(\vec{x})$ is established based on the first migration result $m_{mig}{}^1 = F^T d$ and the second migration result $m_{mig}{}^2 = F^T \widehat{d}^1$ by a formula (5) as follows:

$$S(\vec{x}) = m_{mig}{}^1(\vec{x}) \circ m_{mig}{}^2(\vec{x})^{\circ -1} ; \qquad (5)$$

wherein a symbol "$\circ$" denotes a Hadamard product, and denotes division of a corresponding element of $m_{mig}{}^1$ by a corresponding element of $m_{mig}{}^2$ ; and $S(\vec{x})$ calibrates spatial amplitude changes introduced by the demigration operator and a migration operator under conditions of a determined field observation system and a determined speed model for a work area.

In an example of the disclosure, the inner product of the migration profile is determined by a formula (6) as follows:

$$\left\langle F^T m, F^T m \right\rangle = \sum_i m_{mig} m_{mig} = M ; \qquad (6)$$

wherein M denotes the inner product, and $m_{mig}$ denotes the migration profile.

In an example of the disclosure, the dot product is computed based on the seismic observation data and the demigration synthesized seismic data by a formula (7) as follows:

$$\left\langle Fm, d \right\rangle = \sum_i \widehat{d}_i d_i = D ; \qquad (7)$$

wherein $\widehat{d}_i$ denotes $i^{th}$ data in the seismic observation data, $\widehat{d}_i$ denotes $i^{th}$ data in the demigration synthesized seismic data, and D denotes the dot product.

In an example of the disclosure, the amplitude regularized seismic data are obtained by performing, based on the dot product and the inner product, the amplitude regularization on the demigration synthesized seismic data by a formula (8) as follows:

$$\widetilde{d}_i = \widehat{d}_i * \frac{M}{D} ; \qquad (8)$$

wherein $\widehat{d}_i$ denotes the demigration synthesized seismic data, M denotes the inner product, and D denotes the dot product.

A second aspect of the disclosure provides an apparatus for least-squares migration inversion converging stably. The apparatus includes:

an obtainment module configured to obtain seismic observation data;
a pre-stack depth migration module configured to obtain a migration profile by performing pre-stack depth migration on the seismic observation data;
a demigration module configured to obtain demigration synthesized seismic data by performing demigration on the migration profile;
a first computation module configured to compute a dot product based on the seismic observation data and the demigration synthesized seismic data;
a second computation module configured to determine an inner product of the migration profile;
an amplitude regularization module configured to obtain amplitude regularized seismic data by performing, based on the dot product and the inner product, amplitude regularization on the demigration synthesized seismic data;
a residual computation module configured to obtain a residual value of seismic data by performing matching subtraction on the seismic observation data and the amplitude regularized seismic data;

a gradient field computation module configured to obtain, by using an adjoint state method, a gradient field of the inversion based on the residual value of the seismic data and on the basis of least-squares reverse-time migration;

a calibration module configured to obtain a processed gradient field by performing, by using an amplitude calibration operator, amplitude calibration on the gradient field of the inversion; and

an inversion update module configured to compute an update step by using an inversion method based on the processed gradient field, and update a reflection coefficient until the inversion converges.

A third aspect of the disclosure provides a processor. The processor is configured to execute the method for least-squares migration inversion converging stably described above.

A fourth aspect of the disclosure provides a machine-readable storage medium. The machine-readable storage medium stores an instruction, where the instruction causes a processor to be configured to execute the method for least-squares migration inversion converging stably described above when executed by the processor.

Compared with the prior art, the technical solution of the disclosure has the following beneficial effects:

The disclosure provides the method and apparatus for least-squares migration inversion converging stably. The method satisfies dot product test conditions of a forward operator and an inverse operator of a least-squares iteration algorithm, makes a least-squares objective function converge, and improves the convergence and the stability of the inversion. The method has a small computation amount, a small storage capacity, low cost, high efficiency, and better adaptability to field data with merely one time of computation required.

Other features and advantages of the examples of the disclosure will be described in detail in the following specific embodiments.

**Brief Description of Drawings**

The accompanying drawings are used for providing further understanding of the examples of the disclosure as a constituent part of the description, serve to explain the examples of the disclosure together with following specific embodiments, but do not constitute limitation to the examples of the disclosure. In the figures:

The accompanying drawings are used for providing further understanding of the examples of the disclosure as a constituent part of the description, serve to explain the examples of the disclosure together with following specific embodiments, but do not constitute limitation to the examples of the disclosure. In the figures:

FIG. 1 illustratively shows a schematic diagram of an application environment of a method for least-squares migration inversion converging stably according to an example of the disclosure;

FIG. 2 illustratively shows a schematic flowchart of a method for least-squares migration inversion converging stably according to an example of the disclosure;

FIG. 3 illustratively show a flowchart of implementing an algorithm according to an example of the disclosure;

FIG. 4 illustratively shows an inversion convergence curve of an objective function according to an example of the disclosure;

FIG. 5 illustratively shows demigration data of a second iteration according to an example of the disclosure;

FIG. 6 illustratively shows a data residual of a first iteration according to an example of the disclosure;

FIG. 7 illustratively shows demigration data of a 20th iteration according to an example of the disclosure;

FIG. 8 illustratively shows a data residual of a 20th iteration according to an example of the disclosure;

FIG. 9 illustratively shows a speed model according to an example of the disclosure;

FIG. 10 illustratively shows an amplitude calibration operator of a gradient field according to an example of the disclosure;

FIG. 11 illustratively shows a reflection coefficient model according to an example of the disclosure;

FIG. 12 illustratively shows a conventional reverse-time migration image;

FIG. 13 illustratively shows a least-squares reverse-time migration result according to an example of the disclosure;

FIG. 14 illustratively shows a structural block diagram of an apparatus for least-squares migration inversion converging stably according to an example of the disclosure; and

FIG. 15 illustratively shows an internal structural diagram of a computer device according to an example of the disclosure.

**Detailed Description of the Embodiments**

The specific embodiments of the examples of the disclosure are described in detail below with reference to accompanying drawings. It should be understood that the specific embodiments described herein are merely used to describe and explain the examples of the disclosure, rather than limit the examples of the disclosure.

The terms "first", "second", etc. in the disclosure are used to distinguish different objects, rather than to describe a specific sequence. In addition, the terms "comprise", "include" and their any form of variation are intended to cover non-exclusive inclusions.

The example of the disclosure provides a method and an apparatus for predicting a service life of an old well to be converted into a water injection well, an electronic device and a computer-readable storage medium.

The device may be specifically integrated into a computer device, and the electronic device may be a terminal, a server, etc. The terminal may be a mobile phone, a portable android device, an intelligent Bluetooth device, a notebook computer, a personal computer (PC), etc. The server may be a single server or a server cluster composed of a plurality of servers.

In some examples, the apparatus may also be integrated into a plurality of electronic devices. For example, the apparatus may be integrated into a plurality of servers, and the method of the disclosure is implemented by the plurality of servers.

In some examples, the server may be alternatively implemented as the terminal.

The detailed description will be provided separately below. It should be noted that serial numbers of the following examples are not used as limitation to a preference sequence of the examples.

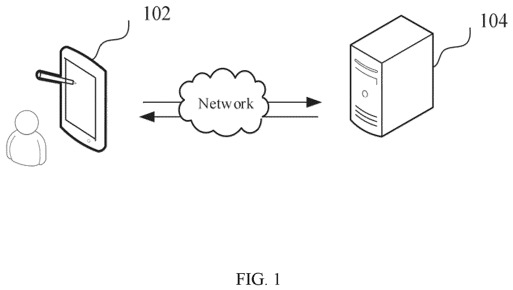

A method for least-squares migration inversion converging stably according to the disclosure may be applied to an application environment shown in FIG. 1. The terminal 102 communicates with the server 104 through the network. The terminal 102 may be, but is not limited to, various personal computers, notebook computers, smart phones, portable android devices, and portable wearable devices. The server 104 may be implemented by an independent server or the server cluster composed of the plurality of servers.

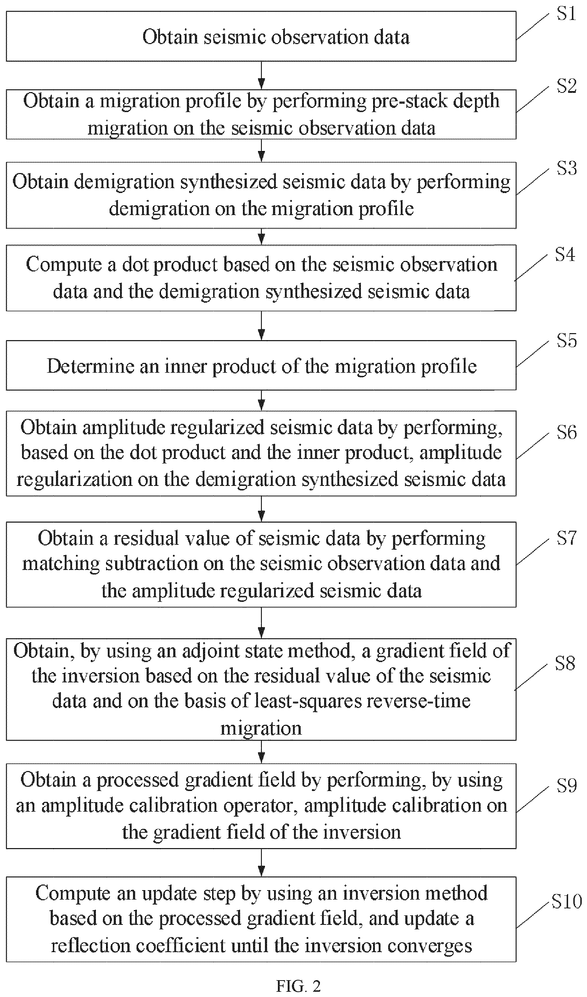

FIG. 2 illustratively shows a schematic flowchart of a method for least-squares migration inversion converging stably according to an example of the disclosure. As shown in FIG. 2, in an example of the disclosure, a method for least-squares migration inversion converging stably is provided. This example is mainly described with this method applied to the terminal 102 (or the server 104) in the FIG. 1. The method includes:

Step 1, seismic observation data are obtained.

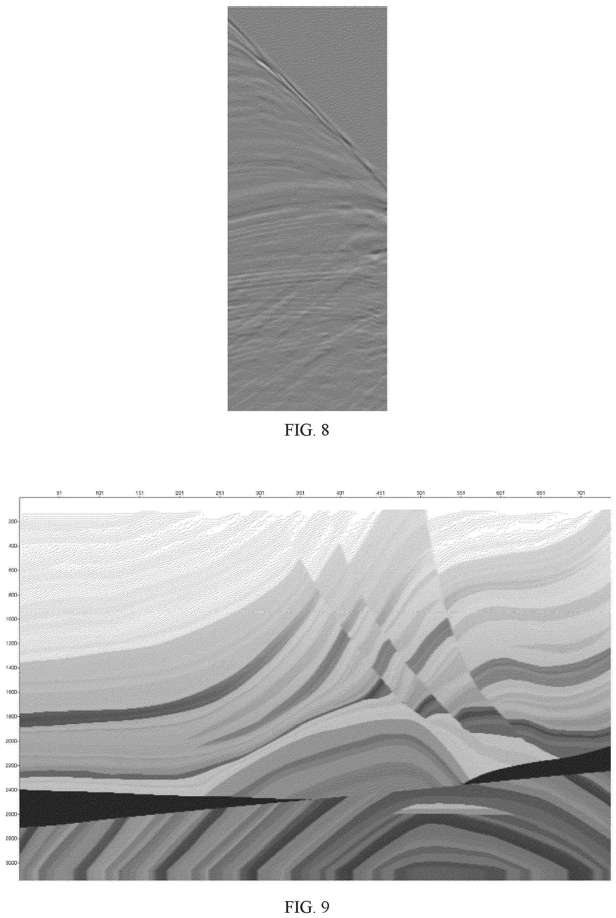

FIG. 9 illustratively shows a speed model according to an example of the disclosure. In this example, an observation system is designed based on the Marmousi speed model. Shot gather seismic data, that is, initial seismic observation data of least-squares migration, are obtained through forward modeling. Then the initial seismic observation data are processed to remove noise and environmental interference, to obtain seismic observation data $d$ .

Step 2, a migration profile is obtained by performing pre-stack depth migration on the seismic observation data.

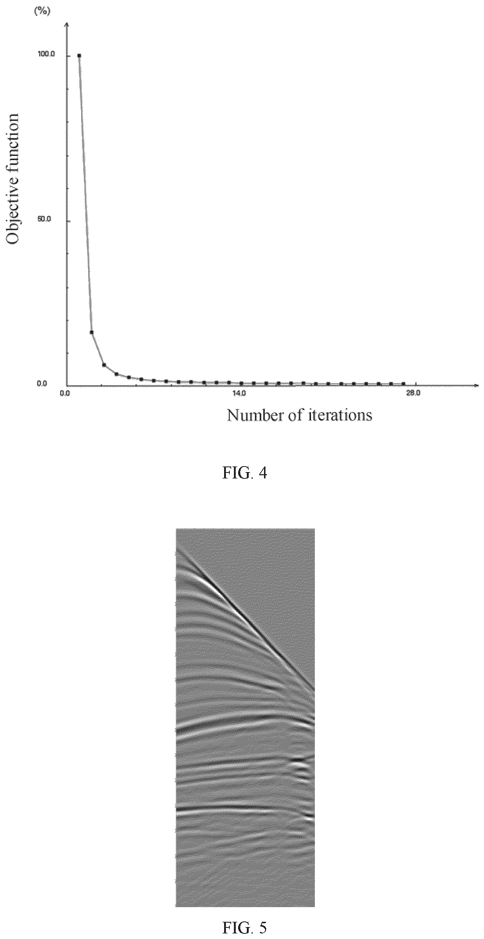

In this example, a first migration result $m_{mig}^{1} = F^{T} d$, that is, a first migration profile, is obtained by performing first pre-stack depth migration on the seismic observation data $d$. Then, simulated data $\hat{d}^1 = F(m_{mig}^{1})$ is obtained by performing demigration with $m_{mig}^{1}$ as a reflection coefficient. Then a second migration result $m_{mig}^{2} = F^{T} \hat{d}^{1}$ , that is, a second migration profile, is obtained by performing second pre-stack depth migration using $\hat{d}^1$. FIG. 5 illustratively shows a demigration profile of a second iteration according to an example of the disclosure.

In this example, the method further includes: an amplitude calibration operator $S(\vec{x})$ is established based on the first migration result $m_{mig}^{1} = F^{T} d$ and the second migration result $m_{mig}^{2} = F^{T} \hat{d}^{1}$ ;

$$S(\vec{x}) = m_{mig}^{1}(\vec{x}) \circ m_{mig}^{2}(\vec{x})^{\circ -1} ; \qquad (5)$$

In the formula, a symbol "∘" denotes a Hadamard product, and denotes division of a corresponding element of

$m_{mig}{}^1$ by a corresponding element of $m_{mig}{}^2$. And $S(\vec{x})$ calibrates spatial amplitude changes introduced by the demigration operator and a migration operator under conditions of a determined field observation system and a determined speed model for a work area.

Step 3, demigration synthesized seismic data are obtained by performing demigration on the migration profile.

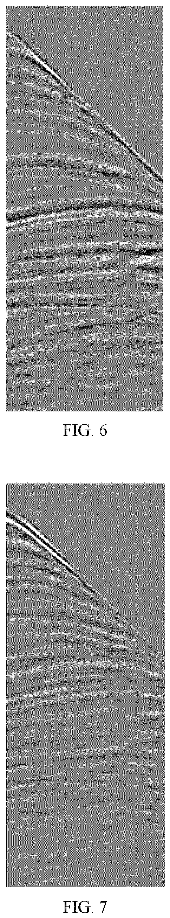

In this example, an inversion iteration is started, and the simulated data $\hat{d}_i = F(m_{mig}{}^i)$, that is, the demigration synthesized seismic data, are obtained by performing the demigration with an $i^{th}$ migration result $m_{mig}{}^i$ as the reflection coefficient. FIG. 7 illustratively shows a demigration profile of a $20^{th}$ iteration according to an example of the disclosure.

Step 4, a dot product is computed based on the seismic observation data and the demigration synthesized seismic data.

In this example, the dot product is computed based on the seismic observation data and the demigration synthesized seismic data by a formula (7) as follows:

$$\langle Fm, d \rangle = \sum_i \hat{d}_i d_i = D \; ; \qquad (7)$$

In the formula, $\hat{d}_i$ denotes $i^{th}$ data in the seismic observation data, $\hat{d}_i$ denotes $i^{th}$ data in the demigration synthesized seismic data, and D denotes the dot product.

Step 5, an inner product of the migration profile is determined.

In this example, the inner product of the migration profile is obtained by a formula (6) as follows:

$$\langle F^T m, F^T m \rangle = \sum_i m_{mig} m_{mig} = M \; ; \qquad (6)$$

In the formula, M denotes the inner product, and $m_{mig}$ denotes the migration profile.

Step 6, amplitude regularized seismic data are obtained by performing, based on the dot product and the inner product, amplitude regularization on the demigration synthesized seismic data.

In this example, the amplitude regularized seismic data are obtained by performing, based on the dot product and the inner product, the amplitude regularization on the demigration synthesized seismic data by a formula (8) as follows:

$$\tilde{d}_i = \hat{d}_i * \frac{M}{D} \; ; \qquad (8)$$

In the formula, $\hat{d}_i$ denotes the demigration synthesized seismic data, M denotes the inner product, and D denotes the dot product.

Step 7, a residual value of seismic data is obtained by performing matching subtraction on the seismic observation data and the amplitude regularized seismic data.

In this example, FIG. 6 illustratively shows a data residual of a first iteration. FIG. 8 illustratively shows a data residual of a $20^{th}$ iteration.

Step 8, a gradient field of the inversion is obtained by using an adjoint state method based on the residual value of the seismic data and on the basis of least-squares reverse-time migration.

In this example, the gradient field is obtained by applying the migration operator to the residual value of the seismic data obtained in step 7, and the gradient field denotes an update direction of the inversion.

The gradient field $\nabla f(m)$ is obtained by using the adjoint state method. This link includes forward continuation and backward continuation. The forward continuation is the demigration operator $F$, and the backward continuation is the migration operator $F^T$, and an input of the backward continuation is $d_{residual} = \hat{d} - d$, wherein $\hat{d} = F(m)$. An expression may be as follows:

$$\begin{cases} \dfrac{1}{v^2}\dfrac{\partial^2 u}{\partial t^2} - \Delta u = g\left(t\right) \\[2ex] \dfrac{1}{v^2}\dfrac{\partial^2 w}{\partial t^2} - \Delta u = m\left(x\right)u\left(\vec{x},t\right) \\[2ex] u\left(\vec{x},0\right)=0 \quad , w\left(\vec{x},0\right)=0 \\[2ex] \dfrac{\partial u}{\partial t}\left(\vec{x},0\right)=0 \quad ,\dfrac{\partial w}{\partial t}\left(\vec{x},0\right)=0 \end{cases} ; \tag{2}$$

$$\begin{cases} \dfrac{1}{v^2}\dfrac{\partial^2 v}{\partial t^2} - \Delta v = w - d \\[2ex] v\left(\vec{x},T\right)=0 \\[2ex] \dfrac{\partial v}{\partial t}\left(\vec{x},T\right)=0 \end{cases} ; \tag{3}$$

$$\frac{\partial f}{\partial m} = \int_0^T v\frac{\partial^2 u}{\partial t^2}\,dt \; ; \tag{4}$$

In the formula, $g$ denotes a source wavelet, w denotes a reflection wavefield, $u$ and $v$ denotes the forward continuation wavefield and the backward continuation wavefield, $\Delta$ denotes a Laplace operator (a second-order differential operator), $\vec{x}$ denotes a coordinate of a discrete point in a two-dimensional space or a three-dimensional space, $m(x)$ denotes a reflection coefficient corresponding to the discrete point in the two-dimensional or the three-dimensional space, $T$ denotes total duration of a seismic record, and $t$ denotes time. And $\nabla f(m)$, that is, the gradient field of the inversion, may be obtained through summation of $u$ and $v$.

Step 9, a processed gradient field is obtained by performing, by using an amplitude calibration operator, amplitude calibration on the gradient field of the inversion.

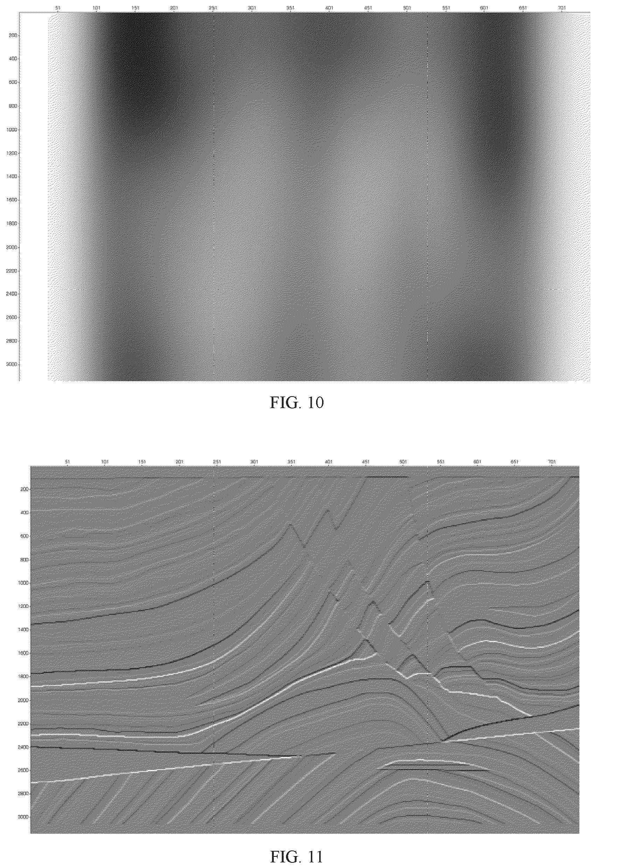

FIG. 10 illustratively shows an amplitude calibration operator of a gradient field according to an example of the disclosure. In this example, a processed gradient field is obtained by multiplying the amplitude calibration operator $S(\vec{x})$ obtained in step 2 by a numerical value at a corresponding point of the gradient field $\nabla f(m)$.

Step 10, an update step is computed by an inversion method based on the processed gradient field, and a reflection coefficient is updated until the inversion converges.

FIG. 4 illustratively shows an inversion convergence curve of an objective function according to an example of the disclosure. As shown in FIG. 4, an abscissa denotes a number of iterations, and an ordinate denotes a value of the objective function, and the value decreases and tends to be flat, indicating that the inversion converges. It can be seen from the figure that the objective function decreases along with an increase in the number of iterations and tends to converge gradually.

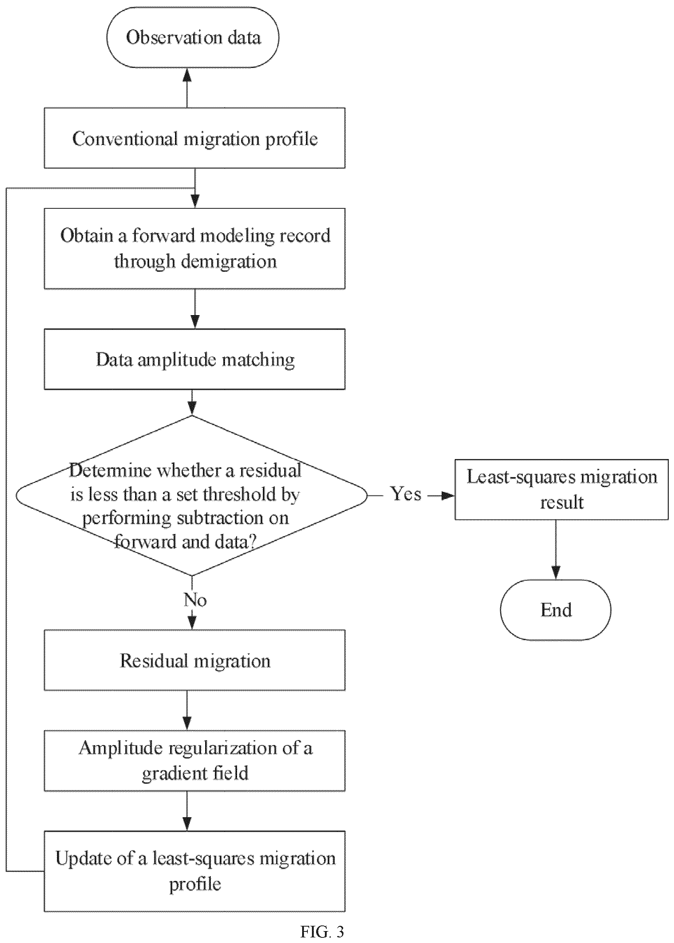

In this example, as shown in FIG. 3, the inversion convergence of the objective function needs to determine whether the residual value in step 7 is less than a set threshold. If the residual value in step 7 is less than the set threshold, the seismic migration profile is output. If the residual value in step 7 is greater than or equal to the set threshold, return to step 3, iteration on a migration profile result is implemented continuously until the residual value is less than the set threshold, and then the migration profile is output.

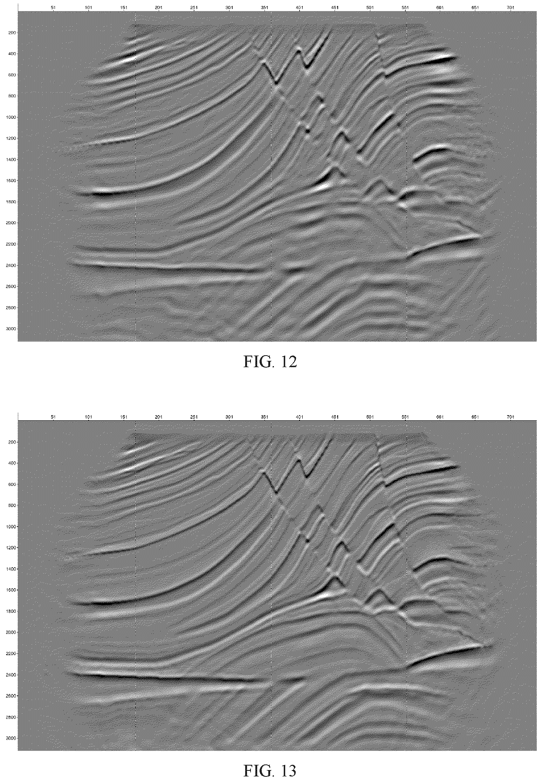

FIG. 11 illustratively shows a reflection coefficient model according to an example of the disclosure. FIG. 12 illustratively shows a conventional reverse-time migration image. FIG. 13 illustratively shows a least-squares reverse-time migration result according to an example of the disclosure.

The traditional technology has high requirements on a migration operator and the demigration operator in the inversion process, and the inversion will not converge unless the operators pass the dot test. The method of this example solves the problem that the least-squares migration technology is difficult to converge stably in a case of actual data, reduces a requirement for passing the dot test, improves the convergence of the inversion, and improves practicality of the technology.

FIG. 2 is a schematic flowchart of a method for least-squares migration inversion converging stably according to an example. It should be understood that although steps in the flowchart of FIG. 2 are shown in sequence as indicated by arrows, these steps are not necessarily executed in sequence as indicated by the arrows. Unless explicitly stated in this text, execution of these steps is not strictly limited in sequence, and these steps can be executed in another sequence. In addition, at least some steps in FIG. 2 may include a plurality of sub-steps or a plurality of stages. These sub-steps or stages are not necessarily executed at the same moment, and may alternatively be executed at different moments. An execution sequence of these sub-steps or stages is not necessarily sequential, and these sub-steps or stages may be executed by turns or alternately with the other steps or at least some sub-steps or stages of the other steps.

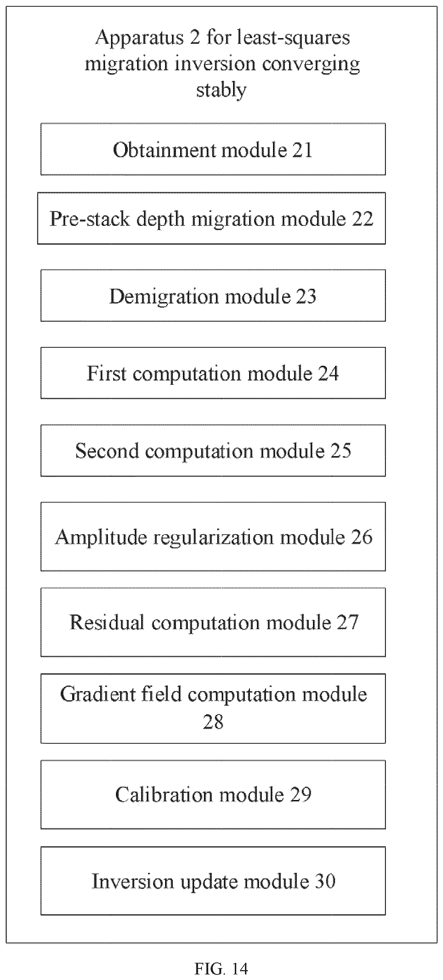

In an example, as shown in FIG. 14, the apparatus for least-squares migration inversion converging stably is provided. The apparatus for least-squares migration inversion converging stably includes an obtainment module 21, a pre-stack depth migration module 22, a demigration module 23, a first computation module 24, a second computation module 25, an amplitude regularization module 26, a residual computation module 27, a gradient field computation module 28, a calibration module 29 and an inversion update module 30.

The obtainment module 21 is configured to obtain seismic observation data.

The pre-stack depth migration module 22 is configured to obtain a migration profile by performing pre-stack depth migration on the seismic observation data.

The demigration module 23 is configured to obtain demigration synthesized seismic data by performing demigration on the migration profile.

The first computation module 24 is configured to compute a dot product based on the seismic observation data and the demigration synthesized seismic data.

The second computation module 25 is configured to determine an inner product of the migration profile.

The amplitude regularization module 26 is configured to obtain amplitude regularized seismic data by performing, based on the dot product and the inner product, amplitude regularization on the demigration synthesized seismic data.

The residual computation module 27 is configured to obtain a residual value of seismic data by performing matching subtraction on the seismic observation data and the amplitude regularized seismic data.

The gradient field computation module 28 is configured to obtain, by using an adjoint state method, a gradient field of the inversion based on the residual value of the seismic data and on the basis of least-squares reverse-time migration.

The calibration module 29 is configured to obtain a processed gradient field by performing, by using an amplitude calibration operator, amplitude calibration on the gradient field of the inversion.

The inversion update module 30 is configured to compute an update step by using an inversion method based on the processed gradient field, and update a reflection coefficient until the inversion converges.

The apparatus for least-squares migration inversion converging stably includes a processor and a memory. The obtainment module 21, the pre-stack depth migration module 22, the demigration module 23, the first computation module 24, the second computation module 25, the amplitude regularization module 26, the residual computation module 27, the gradient field computation module 28, the calibration module 29 and the inversion update module 30 are all stored in the memory as program units, and the processor executes the above program modules stored in the memory to implement a corresponding function.

The processor contains a core, and the core invokes a corresponding program unit in the memory. One or more cores may be set, and the method for least-squares migration inversion converging stably may be implemented by adjusting parameters of the cores.

The memory may include a non-permanent memory, a random access memory (RAM) and/or a nonvolatile memory such as a read-only memory (ROM) or a flash RAM in the computer readable medium, and the memory includes at least one storage chip.

The example of the disclosure provides a storage medium. The storage medium stores a program, and the program implements the method for least-squares migration inversion converging stably when executed by a processor.

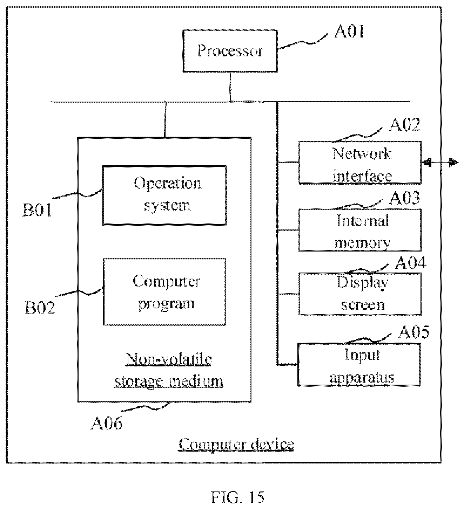

In an example, a computer device is provided. The computer device may be a terminal, and its internal structure diagram may be shown in FIG. 15. The computer device includes a processor A01, a network interface A02, a display screen A04, an input device A05 and a memory (not shown in the figure) that are connected through a system bus. The processor A01 of the computer device is configured to provide computing and control capacities. The memory of the computer device includes an internal memory A03 and a nonvolatile storage medium A06. The nonvolatile storage medium A06 stores an operation system B01 and a computer program B02. The internal memory A03 provides an environment for operation of the operation system B01 and the computer program B02 in the nonvolatile storage medium A06. The network interface A02 of the computer device is configured to communicate with an external terminal through networking. The computer program implements the method for least-squares migration inversion converging stably when executed by the processor A01. The display screen A04 of the computer device may be a liquid crystal display screen or an electronic ink display screen. The input device A05 of the computer device may be a touch layer covering the display screen, or may be a button, a trackball or a touch pad arranged on a shell of the computer device, or may be an external keyboard, touch pad or mouse.

It can be understood by those skilled in the art that the structure shown in FIG. 15 is merely a block diagram of some structure related to the solution of the disclosure, and does not constitute limitation to the computer device to which the solution of the disclosure is applied. The specific computer device may include more or less components than those shown in the figure, or combine some components, or have different component arrangements.

In an example, the apparatus for least-squares migration inversion converging stably according to the disclosure may be implemented as a computer program. The computer program may be run on the computer device as shown in FIG. 15. The memory of the computer device may store the program modules that make up the apparatus for least-squares migration inversion converging stably, which are, for example, the obtainment module 21, the pre-stack depth migration module 22, the demigration module 23, the first computation module 24, the second computation module 25, the amplitude regularization module 26, the residual computation module 27, the gradient field computation module 28, the calibration module 29 and the inversion update module 30 that are shown in FIG. 14. The computer program composed of the program modules causes the processor to execute steps in the method for least-squares migration inversion converging stably of the examples of the disclosure described in this description.

The computer device shown in FIG. 15 may executes step 1 through the obtainment module 21 of the apparatus for least-squares migration inversion converging stably as shown in FIG. 14, executes step 2 through the pre-stack depth migration module 22, executes step 3 through the demigration module 23, executes step 4 through the first computation module 24, executes step 5 through the second computation module 25, executes step 6 through the amplitude regularization module 26, executes step 7 through the residual computation module 27, executes step 8 through the gradient field computation module 28, executes step 9 through the calibration module 29 and executes step 10 through the inversion update module 30.

The example of the disclosure provides a device. The device includes a processor, a memory, and a program that is stored on the memory and runnable on the processor. When executing the program, the processor implements:

Step 1, seismic observation data are obtained.

Step 2, a migration profile is obtained by performing pre-stack depth migration on the seismic observation data.

Step 3, demigration synthesized seismic data are obtained by performing demigration on the migration profile.

Step 4, a dot product is computed based on the seismic observation data and the demigration synthesized seismic data.

Step 5, an inner product of the migration profile is determined.

Step 6, amplitude regularized seismic data are obtained by performing, based on the dot product and the inner product, amplitude regularization on the demigration synthesized seismic data.

Step 7, a residual value of seismic data is obtained by performing matching subtraction on the seismic observation data and the amplitude regularized seismic data.

Step 8, a gradient field of the inversion is obtained by using an adjoint state method based on the residual value of the seismic data and on the basis of least-squares reverse-time migration.

Step 9, a processed gradient field is obtained by performing, by using an amplitude calibration operator, amplitude calibration on the gradient field of the inversion.

Step 10, an update step is computed by an inversion method based on the processed gradient field, and a reflection coefficient is updated until the inversion converges.

In an example, the step that seismic observation data are obtained includes: initial seismic observation data are obtained by a forward modeling method. The seismic observation data re obtained by performing preprocessing on the initial seismic observation data; where the preprocessing includes noise removal and environmental interference removal.

In an example, the least-squares reverse-time migration is an imaging algorithm based on the inversion, and an objective function of the inversion is as follows:

$$f(m) = \frac{1}{2}\left\|F(m) - d\right\|^2$$

, where $F$ denotes a demigration operator, $d$ denotes the seismic data, and $m$ denotes a reflection coefficient model.

The migration operator is an adjoint operator of the demigration operator: $m_{mig} = F^T d$. In the formula, $m_{mig}$ denotes a migration image, an objective of the least-squares inversion is to optimize $m$, and an error between simulated data of the demigration and actual observation data is minimized to the greatest extent. An adopted measure is a least-squares error, and the objective function of the inversion is to obtain min $f(m)$:

$$\min f\left(m\right)=\frac{1}{2}\left\|F\left(m\right)-d\right\|^{2} \; ; \qquad (1)$$

In the formula, min $f(m)$ denotes a minimum value of the objective function, $F$ denotes a demigration operator, $d$ denotes the seismic data, and $m$ denotes a reflection coefficient model.

In an example, the step that a gradient field of the inversion is obtained by using an adjoint state method includes:

a forward continuation wavefield $u$ and a backward continuation wavefield $v$ are computed; and

the gradient field $\nabla f(m)$ of the inversion is computed based on the forward continuation wavefield u and the backward continuation wavefield $v$.

In an example, the forward continuation wavefield $u$ and the backward continuation wavefield $v$ are computed by formulas (2)-(4) as follows:

$$\begin{cases} \dfrac{1}{v^{2}}\dfrac{\partial^{2}u}{\partial t^{2}}-\Delta u = g\left(t\right) \\[2mm] \dfrac{1}{v^{2}}\dfrac{\partial^{2}w}{\partial t^{2}}-\Delta u = m\left(x\right)u\left(\vec{x},t\right) \\[2mm] u\left(\vec{x},0\right)=0 \quad , w\left(\vec{x},0\right)=0 \\[2mm] \dfrac{\partial u}{\partial t}\left(\vec{x},0\right)=0 \quad , \dfrac{\partial w}{\partial t}\left(\vec{x},0\right)=0 \end{cases} \; ; \qquad (2)$$

$$\begin{cases} \dfrac{1}{v^{2}}\dfrac{\partial^{2}v}{\partial t^{2}}-\Delta v = w-d \\[2mm] v\left(\vec{x},T\right)=0 \\[2mm] \dfrac{\partial v}{\partial t}\left(\vec{x},T\right)=0 \end{cases} \; ; \qquad (3)$$

$$\frac{\partial f}{\partial m}=\int_{0}^{T} v\frac{\partial^{2}u}{\partial t^{2}}dt \; ; \qquad (4)$$

In the formula, $g$ denotes a source wavelet, $w$ denotes a reflection wavefield, $u$ denotes the forward continuation wavefield, $v$ denotes the backward continuation wavefield, $\Delta$ denotes a Laplace operator (a second-order differential operator), $\vec{x}$ denotes a coordinate of a discrete point in a two-dimensional space or a three-dimensional space, $m(x)$ denotes a reflection coefficient corresponding to the discrete point in the two-dimensional or the three-dimensional space, $T$ denotes total duration of a seismic record, and $t$ denotes time.

In an example, the method further includes: strictness $\langle Fm, d \rangle = \langle m, F^{T} d \rangle$ of the self-adjoint operator is inspected by using the dot product test. **In** the formula, $F$ denotes the demigration operator, $F^{T}$ denotes the migration operator, $d$ denotes the seismic data, and $m$ denotes a reflection coefficient model. A left side of the equation denotes a dot product of the seismic data obtained by the demigration and input seismic data, and a right side of the formula denotes a dot product of the reflection coefficient and the migration image. Whether the dot product test of the positive operator and the inverse operator of the algorithm is passed is a necessary condition for the convergence of the least-squares objective function.

The adjoint operator is defined by the dot product test in a mathematical form. In physics, for the least-squares migration, energy of an entire system is required not to be increased or decreased after first demigration and first migration. This requirement is actually harsh. For implementing a computer algorithm, many factors that affect an amplitude of the result, such as the source wavelet, boundary absorption, frequency-wave number domain transformation and filtering exist, and may make the program fail the dot product test.

The method of the example of the disclosure can satisfy dot product test conditions of the forward operator and the inverse operator of the least-squares iteration algorithm, makes the least-squares objective function converge, and improves the convergence and the stability of the inversion. The method of the example of the disclosure has a small computation amount, a small storage capacity, low cost, high efficiency, and better adaptability to field data with merely one time of computation required.

In an example, the method further includes: the amplitude calibration operator is established. The step that the amplitude calibration operator is established includes:

a first migration result $m_{mig}^1 = F^T d$ is obtained by performing first pre-stack depth migration on the seismic observation data $d$;

a first demigration synthesized seismic data $\hat{d}^1 = F(m_{mig}^1)$ are obtained by performing demigration on the first migration result $m_{mig}^1 = F^T d$;

a second migration result $m_{mig}^2 = F^T \hat{d}^1$ is obtained by performing second pre-stack depth migration on the first demigration synthesized seismic data $\hat{d}^1 = F(m_{mig}^1)$; and

the amplitude calibration operator $S(\vec{x})$ is established based on the first migration result $m_{mig}^1 = F^T d$ and the second migration result $m_{mig}^2 = F^T \hat{d}^1$.

In an example, the step that the amplitude calibration operator $S(\vec{x})$ is established based on the first migration result $m_{mig}^1 = F^T d$ and the second migration result $m_{mig}^2 = F^T \hat{d}^1$ by a formula (5) as follows:

$$S(\vec{x}) = m_{mig}^1(\vec{x}) \circ m_{mig}^2(\vec{x})^{\circ -1} ; \qquad (5)$$

In the formula, a symbol "$\circ$" denotes a Hadamard product, and denotes division of a corresponding element of $m_{mig}^1$ by a corresponding element of $m_{mig}^2$; and $S(\vec{x})$ calibrates spatial amplitude changes introduced by the demigration operator and a migration operator under conditions of a determined field observation system and a determined speed model for a work area.

In an example, an inner product of the migration profile is determined by a formula (6) as follows:

$$\left\langle F^T m, F^T m \right\rangle = \sum_i m_{mig} m_{mig} = M ; \qquad (6)$$

In the formula, M denotes the inner product, and $m_{mig}$ denotes the migration profile.

In an example, the dot product is computed based on the seismic observation data and the demigration synthesized seismic data by a formula (7) as follows:

$$\left\langle Fm, d \right\rangle = \sum_i \hat{d}_i d_i = D ; \qquad (7)$$

In the formula, $\hat{d}_i$ denotes $i$th data in the seismic observation data, $\hat{d}_i$ denotes $i$th data in the demigration synthesized seismic data, and D denotes the dot product.

In an example, the amplitude regularized seismic data are obtained by performing, based on the dot product and the inner product, the amplitude regularization on the demigration synthesized seismic data by a formula (8) as follows:

$$\tilde{d}_i = \hat{d}_i * \frac{M}{D} ; \qquad (8)$$

In the formula, $\hat{d}_i$ denotes the demigration synthesized seismic data, M denotes the inner product, and D denotes the dot product.

Those skilled in the art should understand that the examples of the disclosure may be provided as methods, systems, or computer program products. Thus, the disclosure may take the form of an entire hardware example, an entire software example, or an example combining software and hardware. Moreover, the disclosure may take the form of a computer program product implemented on one or more computer usable storage media (including but not limited to disk memories, compact disc read-only memories (CD-ROMs), and optical memories) including computer usable program codes.

The disclosure is described with reference to the flowchart and/or the block diagram of the method, the device (system), and the computer program product according to the example of the disclosure. It should be understood that each flow and/or block in the flowchart and/or block diagram and a combination of the flow and/or block in the flowchart and/or block diagram can be implemented by computer program instructions. These computer program instructions may be provided for a processor of a general-purpose computer, a special-purpose computer, an embedded processing machine, or other programmable data processing device to produce a machine, such that instructions executed by the processor of the computer or another programmable data processing device generate an apparatus used for implementing a function specified in one or more flows of the flowchart and/or one or more blocks of the block diagram.

These computer program instructions may also be stored in a computer-readable memory that may guide the computer or another programmable data processing device to operate in a specific mode, such that the instructions stored in the computer-readable memory produce an article of manufacture including an instruction apparatus, and the instruction apparatus implements the function specified in one or more flows of the flowchart and/or one or more blocks in the block diagram.

These computer program instructions may also be loaded onto the computer or another programmable data processing device, such that a series of operation steps are executed on the computer or another programmable device to generate computer-implemented processing, and instructions executed on the computer or another programmable device provide steps for implementing the function specified in the one or more flows of the flowchart and/or one or more blocks in the block diagram.

In a typical configuration, a computer device includes one or more central processing units (CPUs), an input/output interface, a network interface, and a memory.

The memory may include a non-permanent memory, a random access memory (RAM) and/or a nonvolatile memory in the computer-readable medium, such as a read-only memory (ROM) or a flash RAM. The memory is an instance of the computer-readable medium.

The computer-readable medium includes permanent or non-permanent, removable or non-removable media, and may store information by any method or technology. Information may be a computer-readable instruction, a data structure, a program module or other data. Examples of a computer storage medium include, but are not limited to, a phase-change random access memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disc read-only memory (CD-ROM), a digital versatile disc (DVD) or other optical storages, a cassette tape, tape or disk storage or other magnetic storage devices, or any other non-transmission media that may be used to store information capable of being accessed by a computing device. According to the definitions herein, the computer-readable medium does not include transitory media, such as modulated data signals and carrier waves.

It should also be noted that the terms "comprise" and "include" or their any other variants intend to cover non-exclusive inclusions, such that a process, a method, a product or a device including a series of elements includes those elements, further includes other elements not listed clearly, or further includes an element inherent to the process, the method, the product or the device. In a case of no more limitation, an element limited by the phrase "comprise a..."or "include a..." does not exclude another identical element existing in the process, the method, the product or the device including the element.

The examples described above are merely examples of the disclosure and are not used to limit the disclosure. It is apparent to a person of ordinary skill in the art that various modifications and changes can be made to the disclosure. Any modification, equivalent substitution, improvement, etc. made within the spirit and principles of the disclosure should fall within the scope of the claims of the disclosure.

**Claims**

1. A method for least-squares migration inversion converging stably, comprising:

   obtaining seismic observation data;
   obtaining a migration profile by performing pre-stack depth migration on the seismic observation data;
   obtaining demigration synthesized seismic data by performing demigration on the migration profile;
   computing a dot product based on the seismic observation data and the demigration synthesized seismic data;

determining an inner product of the migration profile;
obtaining amplitude regularized seismic data by performing, based on the dot product and the inner product, amplitude regularization on the demigration synthesized seismic data;
obtaining a residual value of seismic data by performing matching subtraction on the seismic observation data and the amplitude regularized seismic data;
obtaining, by using an adjoint state method, a gradient field of the inversion based on the residual value of the seismic data and on the basis of least-squares reverse-time migration;
obtaining a processed gradient field by performing, by using an amplitude calibration operator, amplitude calibration on the gradient field of the inversion; and
computing an update step by using an inversion method based on the processed gradient field, and updating a reflection coefficient until the inversion converges.

2. The method according to claim 1, wherein the obtaining seismic observation data comprises:

   obtaining initial seismic observation data by a forward modeling method; and
   obtaining the seismic observation data by performing preprocessing on the initial seismic observation data;
   wherein the preprocessing comprises noise removal and environmental interference removal.

3. The method according to claim 1, wherein the least-squares reverse-time migration is an imaging algorithm based on the inversion, and an objective function of the inversion is as follows:

$$\min f(m) = \frac{1}{2}\|F(m) - d\|^2 ; \qquad (1)$$

   wherein $\min f(m)$ denotes a minimum value of the objective function, $F$ denotes a demigration operator, $d$ denotes the seismic data, and $m$ denotes a reflection coefficient model.

4. The method according to claim 1, wherein the obtaining, by using an adjoint state method, a gradient field of the inversion comprises:

   computing a forward continuation wavefield $u$ and a backward continuation wavefield $v$ ; and
   computing the gradient field $\nabla f(m)$ of the inversion based on the forward continuation wavefield $u$ and the backward continuation wavefield $v$ .

5. The method according to claim 4, wherein the forward continuation wavefield $u$ and the backward continuation wavefield v are computed by formulas (2)-(4) as follows:

$$\begin{cases} \dfrac{1}{v^2}\dfrac{\partial^2 u}{\partial t^2} - \Delta u = g(t) \\[2mm] \dfrac{1}{v^2}\dfrac{\partial^2 w}{\partial t^2} - \Delta u = m(x)u(\vec{x},t) \\[2mm] u(\vec{x},0) = 0 \quad , w(\vec{x},0) = 0 \\[2mm] \dfrac{\partial u}{\partial t}(\vec{x},0) = 0 \quad , \dfrac{\partial w}{\partial t}(\vec{x},0) = 0 \end{cases} ; \qquad (2)$$

$$\begin{cases} \dfrac{1}{v^2}\dfrac{\partial^2 v}{\partial t^2} - \Delta v = w - d \\[2mm] v(\vec{x},T) = 0 \\[2mm] \dfrac{\partial v}{\partial t}(\vec{x},T) = 0 \end{cases} ; \qquad (3)$$

$$\frac{\partial f}{\partial m} = \int_0^T v \frac{\partial^2 u}{\partial t^2} dt \; ; \tag{4}$$

wherein g denotes a source wavelet, $w$ denotes a reflection wavefield, $u$ denotes the forward continuation wavefield, $v$ denotes the backward continuation wavefield, $\Delta$ denotes a Laplace operator, $\vec{x}$ denotes a coordinate of a discrete point in a two-dimensional space or a three-dimensional space, $m(x)$ denotes a reflection coefficient corresponding to the discrete point in the two-dimensional or the three-dimensional space, $T$ denotes total duration of a seismic record, and $t$ denotes time.

6. The method according to claim 1, further comprising: establishing the amplitude calibration operator; wherein the establishing the amplitude calibration operator comprises:

> obtaining a first migration result $m_{mig}^1 = F^T d$ by performing first pre-stack depth migration on the seismic observation data $d$ ;
> obtaining a first demigration synthesized seismic data $\hat{d}^1 = F(m_{mig}^1)$ by performing demigration on the first migration result $m_{mig}^1 = F^T d$ ;
> obtaining a second migration result $m_{mig}^2 = F^T \widehat{d}^1$ by performing second pre-stack depth migration on the first demigration synthesized seismic data $\hat{d}^1 = F(m_{mig}^1)$ ; and
> establishing the amplitude calibration operator $S(\vec{x})$ based on the first migration result $m_{mig}^1 = F^T d$ and the second migration result $m_{mig}^2 = F^T \widehat{d}^1$ .

7. The method according to claim 6, wherein the amplitude calibration operator $S(\vec{x})$ is established based on the first migration result $m_{mig}^1 = F^T d$ and the second migration result $m_{mig}^2 = F^T \widehat{d}^1$ by a formula (5) as follows:

$$S(\vec{x}) = m_{mig}^1(\vec{x}) \circ m_{mig}^2(\vec{x})^{\circ -1} \; ; \tag{5}$$

wherein a symbol "∘" denotes a Hadamard product, and denotes division of a corresponding element of $m_{mig}^1$ by a corresponding element of $m_{mig}^2$ ; and $S(\vec{x})$ calibrates spatial amplitude changes introduced by the demigration operator and a migration operator under conditions of a determined field observation system and a determined speed model for a work area.

8. The method according to claim 1, wherein the inner product of the migration profile is determined by a formula (6) as follows:

$$\left\langle F^T m, F^T m \right\rangle = \sum_i m_{mig} m_{mig} = M \; ; \tag{6}$$

wherein M denotes the inner product, and $m_{mig}$ denotes the migration profile.

9. The method according to claim 8, wherein the dot product is computed based on the seismic observation data and the demigration synthesized seismic data by a formula (7) as follows:

$$\left\langle F m, d \right\rangle = \sum_i \hat{d}_i d_i = D \; ; \tag{7}$$

wherein $\hat{d}_i$ denotes $i$th data in the seismic observation data, $\hat{d}_i$ denotes $i$th data in the demigration synthesized seismic data, and D denotes the dot product.

10. The method according to claim 9, wherein the amplitude regularized seismic data are obtained by performing, based on the dot product and the inner product, the amplitude regularization on the demigration synthesized seismic data by a formula (8) as follows:

$$\tilde{d}_i = \hat{d}_i * \frac{M}{D} \; ; \qquad\qquad (8)$$

wherein $\hat{d}_i$ denotes the demigration synthesized seismic data, M denotes the inner product, and D denotes the dot product.

11. An apparatus for least-squares migration inversion converging stably, comprising:

an obtainment module configured to obtain seismic observation data;
a pre-stack depth migration module configured to obtain a migration profile by performing pre-stack depth migration on the seismic observation data;
a demigration module configured to obtain demigration synthesized seismic data by performing demigration on the migration profile;
a first computation module configured to compute a dot product based on the seismic observation data and the demigration synthesized seismic data;
a second computation module configured to determine an inner product of the migration profile;
an amplitude regularization module configured to obtain amplitude regularized seismic data by performing, based on the dot product and the inner product, amplitude regularization on the demigration synthesized seismic data;
a residual computation module configured to obtain a residual value of seismic data by performing matching subtraction on the seismic observation data and the amplitude regularized seismic data;
a gradient field computation module configured to obtain, by using an adjoint state method, a gradient field of the inversion based on the residual value of the seismic data and on the basis of least-squares reverse-time migration;
a calibration module configured to obtain a processed gradient field by performing, by using an amplitude calibration operator, amplitude calibration on the gradient field of the inversion; and
an inversion update module configured to compute an update step by using an inversion method based on the processed gradient field, and update a reflection coefficient until the inversion converges.

12. A processor, configured to execute the method for least-squares migration inversion converging stably according to any one of claims 1 to 10.

13. A machine-readable storage medium, storing an instruction, wherein the instruction causes a processor to be configured to execute the method for least-squares migration inversion converging stably according to any one of claims 1 to 10 when executed by the processor.

FIG. 1

Obtain seismic observation data — S1

↓

Obtain a migration profile by performing pre-stack depth migration on the seismic observation data — S2

↓

Obtain demigration synthesized seismic data by performing demigration on the migration profile — S3

↓

Compute a dot product based on the seismic observation data and the demigration synthesized seismic data — S4

↓

Determine an inner product of the migration profile — S5

↓

Obtain amplitude regularized seismic data by performing, based on the dot product and the inner product, amplitude regularization on the demigration synthesized seismic data — S6

↓

Obtain a residual value of seismic data by performing matching subtraction on the seismic observation data and the amplitude regularized seismic data — S7

↓

Obtain, by using an adjoint state method, a gradient field of the inversion based on the residual value of the seismic data and on the basis of least-squares reverse-time migration — S8

↓

Obtain a processed gradient field by performing, by using an amplitude calibration operator, amplitude calibration on the gradient field of the inversion — S9

↓

Compute an update step by using an inversion method based on the processed gradient field, and update a reflection coefficient until the inversion converges — S10

FIG. 2

Observation data

Conventional migration profile

Obtain a forward modeling record through demigration

Data amplitude matching

Determine whether a residual is less than a set threshold by performing subtraction on forward and data? — Yes → Least-squares migration result → End

No

Residual migration

Amplitude regularization of a gradient field

Update of a least-squares migration profile

FIG. 3

FIG. 4

FIG. 5

FIG. 6

FIG. 7

FIG. 8

FIG. 9

FIG. 10

FIG. 11

FIG. 12

FIG. 13

Apparatus 2 for least-squares migration inversion converging stably

Obtainment module 21

Pre-stack depth migration module 22

Demigration module 23

First computation module 24

Second computation module 25

Amplitude regularization module 26

Residual computation module 27

Gradient field computation module 28

Calibration module 29

Inversion update module 30

FIG. 14

FIG. 15

## INTERNATIONAL SEARCH REPORT

| International application No. |
| --- |
| **PCT/CN2023/136386** |

**A. CLASSIFICATION OF SUBJECT MATTER**

G01V 1/28(2006.01)i; G01V 1/30(2006.01)n; G01V 1/36(2006.01)n; G06F 17/10(2006.01)n

According to International Patent Classification (IPC) or to both national classification and IPC

**B. FIELDS SEARCHED**

Minimum documentation searched (classification system followed by classification symbols)

G01V; G06F

Documentation searched other than minimum documentation to the extent that such documents are included in the fields searched

Electronic data base consulted during the international search (name of data base and, where practicable, search terms used)

CNABS; CNTXT; ENTXTC; ENTXT; VEN; CJFD: 最小二乘, 偏移, 反演, 剖面, 反偏移, 点积, 内积, 点乘, 叉乘, 振幅, 规则化, 残差值, 伴随状态法, 梯度, 标定, 算子, 更新, 步长, 反射系数, 收敛, 稳定, least square, minimum mean-square value, migrat+, invers+, section, profile, dot product, scalar product, inner product, regular+, weighted moving average, residual, deviation, error, grads, operator, update+, step.

**C. DOCUMENTS CONSIDERED TO BE RELEVANT**

| Category* | Citation of document, with indication, where appropriate, of the relevant passages | Relevant to claim No. |
| --- | --- | --- |
| A | CN 108845355 A (CHINA UNIVERSITY OF MINING AND TECHNOLOGY (BEIJING)) 20 November 2018 (2018-11-20) description, paragraphs 0057-0133, and figures 1-7 | 1-13 |
| A | CN 108333628 A (CHINA UNIVERSITY OF PETROLEUM (EAST CHINA)) 27 July 2018 (2018-07-27) description, paragraphs 0107-0213, and figures 1-5 | 1-13 |
| A | CN 103190078 A (DIGIMARC CORPORATION) 03 July 2013 (2013-07-03) entire document | 1-13 |
| A | CN 107783190 A (CHINA UNIVERSITY OF PETROLEUM, BEIJING) 09 March 2018 (2018-03-09) entire document | 1-13 |
| A | WO 2022232572 A1 (SAUDI ARABIAN OIL CO. et al.) 03 November 2022 (2022-11-03) entire document | 1-13 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 April 2024** | **02 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/136386** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2014301158 A1 (CGG SERVICES SA) 09 October 2014 (2014-10-09)<br>    entire document | 1-13 |

Form PCT/ISA/210 (second sheet) (July 2022)

## INTERNATIONAL SEARCH REPORT
### Information on patent family members

International application No.

**PCT/CN2023/136386**

| Patent document cited in search report | | | Publication date (day/month/year) | Patent family member(s) | | | Publication date (day/month/year) |
|---|---|---|---|---|---|---|---|
| CN | 108845355 | A | 20 November 2018 | None | | | |
| CN | 108333628 | A | 27 July 2018 | None | | | |
| CN | 103190078 | A | 03 July 2013 | US | 2018308193 | A1 | 25 October 2018 |
| | | | | US | 10402929 | B2 | 03 September 2019 |
| | | | | JP | 2019200812 | A | 21 November 2019 |
| | | | | JP | 6904544 | B2 | 21 July 2021 |
| | | | | US | 2012076435 | A1 | 29 March 2012 |
| | | | | US | 8750560 | B2 | 10 June 2014 |
| | | | | US | 2015106416 | A1 | 16 April 2015 |
| | | | | US | 9836807 | B2 | 05 December 2017 |
| | | | | US | 2020065933 | A1 | 27 February 2020 |
| | | | | US | 11410262 | B2 | 09 August 2022 |
| | | | | JP | 2017091580 | A | 25 May 2017 |
| | | | | JP | 6336638 | B2 | 06 June 2018 |
| | | | | US | 2016132986 | A1 | 12 May 2016 |
| | | | | US | 9953390 | B2 | 24 April 2018 |
| | | | | JP | 2018125038 | A | 09 August 2018 |
| | | | | JP | 6567127 | B2 | 28 August 2019 |
| | | | | JP | 2013544448 | A | 12 December 2013 |
| | | | | JP | 6092105 | B2 | 08 March 2017 |
| | | | | EP | 2612442 | A1 | 10 July 2013 |
| | | | | EP | 2612442 | A4 | 09 December 2015 |
| | | | | EP | 2612442 | B1 | 18 April 2018 |
| | | | | US | 2012082398 | A1 | 05 April 2012 |
| | | | | US | 8867860 | B2 | 21 October 2014 |
| | | | | US | 2012078989 | A1 | 29 March 2012 |
| | | | | US | 9182778 | B2 | 10 November 2015 |
| | | | | EP | 3396621 | A1 | 31 October 2018 |
| | | | | EP | 3396621 | B1 | 19 August 2020 |
| | | | | WO | 2012031152 | A1 | 08 March 2012 |
| CN | 107783190 | A | 09 March 2018 | None | | | |
| WO | 2022232572 | A1 | 03 November 2022 | US | 2022350042 | A1 | 03 November 2022 |
| | | | | US | 11733413 | B2 | 22 August 2023 |
| US | 2014301158 | A1 | 09 October 2014 | SG | 10201401233 | WA | 27 November 2014 |
| | | | | EP | 2787372 | A2 | 08 October 2014 |
| | | | | EP | 2787372 | A3 | 26 August 2015 |
| | | | | EP | 2787372 | B1 | 06 November 2019 |
| | | | | US | 10088588 | B2 | 02 October 2018 |
| | | | | AU | 2014201896 | A1 | 23 October 2014 |
| | | | | CA | 2848179 | A1 | 03 October 2014 |

Form PCT/ISA/210 (patent family annex) (July 2022)